(19) **Europäisches Patentamt**
**European Patent Office**
**Office européen des brevets**

(11) **EP 2 486 307 B1**

(12) **FASCICULE DE BREVET EUROPEEN**

(45) Date de publication et mention
de la délivrance du brevet:
**26.12.2018 Bulletin 2018/52**

(21) Numéro de dépôt: **10781962.5**

(22) Date de dépôt: **08.10.2010**

(51) Int Cl.:
*F16H 61/04* *(2006.01)*    *F16H 61/28* *(2006.01)*
*F16H 61/688* *(2006.01)*

(86) Numéro de dépôt international:
**PCT/FR2010/052133**

(87) Numéro de publication internationale:
**WO 2011/042676 (14.04.2011 Gazette 2011/15)**

(54) **PROCEDE DE COMMANDE D'UNE BOITE DE VITESSES PILOTEE POUR VEHICULE AUTOMOBILE HYBRIDE OU A DOUBLE EMBRAYAGE**

VERFAHREN ZUR STEUERUNG EINES HALBAUTOMATISCHEN GETRIEBES FÜR EIN HYBRID- ODER DOPPELKUPPLUNGSFAHRZEUG

METHOD FOR CONTROLLING A SEMIAUTOMATIC GEARBOX FOR A HYBRID OR DUAL-CLUTCH AUTOMOBILE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2009 FR 0957051**

(43) Date de publication de la demande:
**15.08.2012 Bulletin 2012/33**

(73) Titulaire: **PSA Automobiles SA**
**78300 Poissy (FR)**

(72) Inventeur: **SCHAEFFER, Eric**
**F-75013 Paris (FR)**

(74) Mandataire: **Fernandez, Francis Lionel et al**
**PSA Automobiles SA**
**VEIP - VV1400**
**Route de Gisy**
**78140 Velizy Villacoublay (FR)**

(56) Documents cités:
**EP-A2- 0 578 398    WO-A1-2004/070232**
**DE-A1- 3 334 711    FR-A1- 2 849 129**
**US-A- 4 461 188**

**Description**

La présente invention concerne un procédé de commande d'une boîte de vitesses pilotée pour véhicule automobile hybride ou à double embrayage. Plus particulièrement, l'invention a pour objet un procédé de pilotage du dispositif de synchronisation d'une boîte de vitesse à double embrayage ou d'un véhicule à architecture hybride, afin de commander la phase de crabotage d'un rapport cible.

Dans l'état de la technique, une boîte de vitesses permet d'adapter le couple moteur disponible, au couple nécessaire au déplacement du véhicule.

Une boîte de vitesses pilotée est une boîte de vitesses traditionnelle mais dont le passage des rapports de vitesses se fait automatiquement grâce à un embrayage piloté par un calculateur électronique. La boîte de vitesses pilotée offre plusieurs modes de pilotage. En effet, elle comporte un mode totalement automatique qui passe les rapports successifs et rétrograde à la place du conducteur. Elle comporte également un mode manuel, où le conducteur sollicite un changement de rapport de vitesse, et où le calculateur détecte cette requête venant du conducteur, la traite pour contrôler le moteur thermique et piloter successivement une phase de débrayage, une phase de décrabotage du rapport engagé, une sélection du rapport souhaité par le conducteur, une phase de synchronisation, une phase de crabotage du rapport souhaité et d'une fermeture progressive de l'embrayage avec reprise du couple moteur.

Une boîte de vitesses pilotée à double embrayage est une boîte de vitesses améliorée. En effet, elle reprend l'architecture d'une boîte de vitesses manuelle classique, scindée en deux demi-boîtes. Les deux demi-boîtes sont configurées de telle sorte que l'une d'elle sert pour les rapports de vitesse pairs et l'autre est employée pour les rapports de vitesse impairs.

La boîte de vitesses pilotée à double embrayage comporte au moins deux arbres primaires, couplés chacun à l'arbre du moteur par l'intermédiaire d'un système à double embrayage. Le premier arbre primaire est couplé à un premier arbre secondaire par l'engagement d'au moins un rapport de démultiplication définissant une première vitesse. Le deuxième arbre primaire est couplé à un deuxième arbre secondaire par l'engagement d'au moins un rapport de démultiplication définissant une deuxième vitesse. Cette deuxième vitesse permet une démultiplication plus faible par rapport à la première vitesse.

Dans une boîte de vitesses à double embrayage, l'embrayage et la sélection des rapports sont commandés par un système d'actionnement, au moyen de vérins hydrauliques ou de moteurs électriques. La boîte de vitesses à double embrayage peut ainsi présélectionner la vitesse supérieure ou inférieure, pour élever ou abaisser le rapport de vitesse souhaité.

Lors d'un passage de vitesse, le système d'actionnement se charge d'actionner l'embrayage et de passer les rapports à la place du conducteur. Le système d'actionnement ouvre l'embrayage de la première demi-boîte et ferme simultanément celui de la seconde. Le système d'actionnement est piloté par le calculateur électronique, capable d'adapter ses actions en fonction du mode de conduite du conducteur.

Toutefois, une boîte de vitesses pilotée est dite à rupture de couple, autrement dit, durant le passage de rapport de vitesse, l'embrayage est ouvert, il n'y a donc plus de transmission de couple entre le moteur et les roue du véhicule. Cela implique que durant les passages de rapports la vitesse du véhicule n'évolue plus.

Cependant, la connaissance de la vitesse de l'arbre primaire sur lequel la fin de la synchronisation doit être détecté est primordiale car elle est nécessaire pour le pilotage de la phase de crabotage du rapport cible. Cette phase de crabotage est en effet pilotée en position, alors que la phase de synchronisation est pilotée en effort. Il est donc indispensable de déterminer précisément la fin de la phase de pilotage en effort pour bien piloter la phase de déplacement. En effet, si la consigne de pilotage en position est décalée par rapport à la position commandé, alors il y a des risques de chocs sur les crabots pouvant conduire à des désagréments pour le conducteur voir à la destruction des crabots rendant la boîte de vitesses inutilisable. En effet, l'effort appliqué par l'actionneur sur la fourchette durant la phase de synchronisation est brutalement libéré.

Actuellement, la vitesse de l'arbre primaire cible est calculée en prenant la vitesse du véhicule avant le passage du rapport de vitesse et en la multipliant par la démultiplication du rapport de vitesse final souhaité.

Toutefois ce mode de calcul classique de la vitesse de l'arbre primaire cible n'est pas applicable au véhicule à architecture hybride et/ou à double embrayage.

En effet, un véhicule de type hybride peut comporter un groupe motopropulseur électrique placé sur le train arrière du véhicule et un groupe motopropulseur thermique placé sur le train avant. Durant le changement de rapport, le groupe motopropulseur électrique compense la perte de couple due à l'ouverture de l'embrayage.

Dans le cas d'une boite de vitesses à double embrayage, le changement de démultiplication sur la demi-boîte non embrayée est effectué alors que la demi-boîte en prise transmet du couple.

Dans les deux cas, durant la phase de synchronisation, la vitesse du véhicule évolue, et le calcul de la vitesse de l'arbre primaire cible de fin de synchronisation ne peut plus être effectué comme précédemment.

Un premier document FR-A-2 915 260 divulgue un procédé permettant de déterminer et d'harmoniser le temps de synchronisation entre les différents rapports de vitesses.

Un second document FR-A-2 794 512 divulgue un procédé de contrôle pour minimiser les à-coups du crabotage lors des passages séquentiels de rapports sur une boîte de vitesse robotisée.

un troisième document FR-A-2 849 129 divulgue un procédé déterminant la vitesse de rotation cible de l'arbre primaire en fin de synchronisation.

Toutefois ces documents ne permettent pas à un homme du métier de déterminer la vitesse réelle de l'arbre primaire cible d'une boîte de vitesses à double embrayage ou d'un véhicule hybride, à la fin de la phase de synchronisation.

L'invention a pour but de résoudre ces inconvénients de l'état de la technique. Pour cela, l'invention propose un procédé de commande d'une boîte de vitesses pilotée à double embrayage ou boite pilotée classique associé à un train arrière électrique, comportant une étape de détermination de la vitesse finale de l'arbre primaire cible de la synchronisation pour effectuer une phase de crabotage au moment le plus opportun.

L'invention a donc pour objet un procédé de commande d'une boîte de vitesses pilotée ou à double embrayage d'un véhicule automobile, pour passer d'un rapport (RI) initial à un rapport (RF) final,

caractérisé en ce que lors d'une phase de synchronisation:

- on détermine la vitesse finale de l'arbre primaire cible de la synchronisation pour effectuer une phase de crabotage,
- cette vitesse finale de l'arbre primaire cible étant fonction de la vitesse de l'arbre primaire avant le changement de rapport, de l'accélération du véhicule durant une phase d'approche du synchroniseur et d'un temps de synchronisation prédéterminées.

L'invention comporte également l'une quelconque des caractéristiques suivantes :

- la vitesse finale Wapfinale de l'arbre primaire cible vaut :

$$Wapfinale = (Vfsynch/2)*60* (1/Kpont)*(1/Kf),$$

$$Vfsynch = Vfapp + A*T,$$

$$Vfapp = VitVehinit + A*Tap$$

VitVehinit étant la vitesse du véhicule au début du passage du rapport, A étant l'accélération du véhicule,

$$T = Ts + Tap,$$

Tap étant le temps de la phase d'approche du synchroniseur,
Ts étant la durée de la phase de synchronisation,
Kpont étant le rapport de démultiplication du pont,
Kf étant le rapport de démultiplication du rapport final ;

- on ajuste l'instant de pilotage en vitesse de la phase de crabotage du crabot à engrener en fonction de la vitesse finale de l'arbre primaire cible déterminée,
- le changement de rapport de vitesse est commandé par le conducteur et/ou par le mode automatique de changement de rapport.

L'invention concerne également une boîte de vitesses à double embrayage d'un véhicule automobile comportant :

- un premier embrayage 3, entraînant un premier arbre primaire 4 creux et un second embrayage 5, juxtaposé au premier, entraînant un deuxième arbre primaire 6 plein, passant à l'intérieur de l'arbre primaire 4 creux,
- les arbres primaires 4, 6 étant couplés chacun aux arbres secondaires 7, 8 par l'intermédiaire de rapports de vitesse,
- ces rapports de vitesse étant répartis en deux demi-boîtes, une première demi-boîte comporte des rapports de vitesse pairs et une deuxième demi-boîte comporte des rapports de vitesse impairs,
- un rapport de vitesse comportant un premier pignon, lié solidairement à un arbre primaire, engrené par un deuxième pignon monté libre en rotation sur un arbre secondaire et rendu solidaire de cet arbre au moyen de boîte à crabots,

caractérisé en ce qu'elle comporte des moyens mettant en oeuvre le procédé selon l'une quelconque des caractéristiques précédentes.

L'invention sera mieux comprise à la lecture de la description qui suit et à l'examen des figures qui l'accompagnent. Celles-ci ne sont présentées qu'à titre illustratif mais nullement limitatif de l'invention. Les figures montrent :

- Figure 1 : une représentation schématique d'une boîte de vitesses pilotée selon l'invention ;
- Figure 2 : un diagramme fonctionnel du procédé selon l'invention ;
- Figure 3 : un ensemble de graphiques temporels illustrant des courbes concernant, les variations de position de fourchettes, la vitesse du véhicule, la vitesse de l'arbre primaire cible.

Les éléments identiques conservent la même référence d'une figure à l'autre.

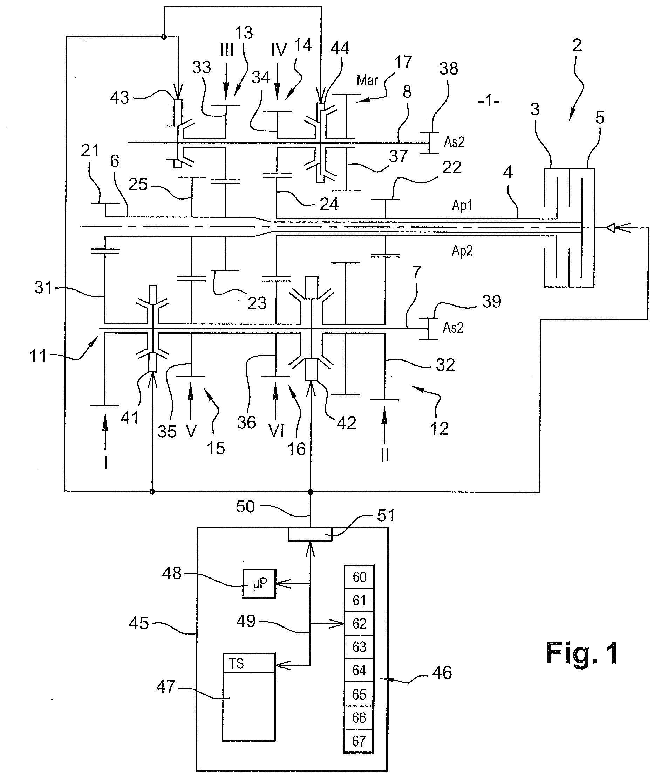

La figure 1 montre un exemple de boîte 1 de vitesses pilotée selon l'invention. Cette boîte 1 de vitesses, reçoit le mouvement d'un arbre moteur (non représenté) par l'intermédiaire d'un système 2 à double embrayage. Ce système 2 comporte un premier embrayage 3 entraînant un premier arbre primaire 4 creux. Le système 2 comporte en outre un second embrayage 5, entraînant un deuxième arbre primaire 6 plein passant à l'intérieur de l'arbre primaire 4 creux.

Les arbres primaires 4, 6 sont couplés chacun aux arbres secondaires 7, 8 et transmettent un mouvement de rotation par l'intermédiaire de rapport de vitesse. Dans ce mode de réalisation, on distingue un premier rapport 11 de l'arbre secondaire 7, appelé par la suite rapport I. Le rapport I comporte un premier pignon 21 lié solidairement à l'arbre 6. Ce pignon 21 est engrené par un deuxième pignon 31 monté libre en rotation sur l'arbre secondaire 7.

Un deuxième rapport 12 de l'arbre secondaire 7, est appelé rapport II. Le rapport II comporte un premier pignon 22 lié solidairement à l'arbre 4. Ce pignon 22 est engrené par un deuxième pignon 32 monté libre en rotation sur l'arbre secondaire 7.

Un troisième rapport 13 de l'arbre secondaire 8, est appelé rapport III. Le rapport III comporte un premier pignon 23 lié solidairement à l'arbre 6. Ce pignon 23 est engrené par un deuxième pignon 33 monté libre en rotation sur l'arbre secondaire 8.

Un quatrième rapport 14 de l'arbre secondaire 8, est appelé rapport IV. Ce rapport IV comporte un premier pignon 24 lié solidairement à l'arbre 4. Ce pignon 24 est engrené par un deuxième pignon 34 monté libre en rotation sur l'arbre secondaire 8.

Un cinquième rapport 15 de l'arbre secondaire 7, est appelé rapport V. Ce rapport V comporte un premier pignon 25 lié solidairement à l'arbre 6. Ce pignon 25 est engrené par un deuxième pignon 35 monté libre en rotation sur l'arbre secondaire 7.

Un sixième rapport 16 de l'arbre secondaire 7, est appelé rapport VI. Le rapport VI comporte le pignon 24 qui est engrené par un deuxième pignon 36 monté libre en rotation sur l'arbre secondaire 7.

L'arbre secondaire 8 comporte en outre un rapport 17, appelé par la suite rapport MAR pour marche arrière, dont la particularité est de réaliser un rapport de démultiplication permettant d'inverser le sens de marche de l'arbre secondaire 8 par rapport au sens de rotation du rapport I. Ce rapport MAR comporte un ensemble de pignons (non représentés) faisant office de premier pignon. Ce premier pignon est engrené par un deuxième pignon 37 monté libre en rotation sur l'arbre secondaire 8.

Chaque arbre secondaire 7, 8 comporte respectivement un pignon de sortie 38, 39. Ces pignons de sortie 38, 39 sont lié à un système de différentiel (non représenté) permettant de transmettre aux roues motrices du véhicule le mouvement de rotation issue des arbres primaires.

Les pignons 31 et 35 montés libres en rotation sur l'arbre secondaire 7 peuvent être rendue solidaire à cet arbre 7, par l'intermédiaire d'un déplacement axial d'un manchon 41 coulissant, comportant à ses extrémités axiales des dispositifs de synchronisation et des crabots à couronne.

Les pignons 32 et 36 montés libres en rotation sur l'arbre secondaire 7 peuvent être rendues solidaire à cet arbre 7, par l'intermédiaire d'un déplacement axial d'un manchon 42 coulissant, comportant à ses extrémités axiales des dispositifs de synchronisation et des crabots à couronne.

Le pignon 33 montés libres en rotation sur l'arbre secondaire 8 peut être rendue solidaire à cet arbre 8, par l'intermédiaire d'un déplacement axial d'un manchon 43 coulissant, comportant à ses extrémités axiales des dispositifs de synchronisation et des crabots à couronne.

Les pignons 34 et 37 montés libres en rotation sur l'arbre secondaire 8 peuvent être rendues solidaire à cet arbre 8, par l'intermédiaire d'un déplacement axial d'un manchon 44 coulissant, comportant à ses extrémités axiales des dispositifs de synchronisation et des crabots à couronne.

Chaque crabot est lié en rotation à l'arbre secondaire auquel il est associé et comporte une couronne mobile axialement. Cette couronne comporte des dents sur sa périphérie destinées à entrer en coopération avec des dents des pignons 31, 32, 33, 34, 35, 36, 37.

Lors d'une phase de crabotage, la couronne mobile du crabot se déplace vers le pignon du rapport à engager appelé par la suite rapport final RF, et engrène avec lui, de sorte que le pignon monté libre se lie en rotation à son arbre secondaire respectif.

Lors d'une phase de décrabotage, la couronne mobile se dégage du pignon craboté, de sorte que ce pignon ne soit pus lié en rotation avec son arbre secondaire.

Chaque crabot comporte un dispositif de synchronisation ou synchroniseur permettant d'amener le crabot et le pignon à engrener à des vitesses de rotations identiques avant de réaliser la phase de crabotage.

Le pilotage des embrayages 3, 5 et des manchons 41, 42, 43, 44 pour la sélection des rapports, est commandé par un calculateur de boîte de vitesse 45, au moyen d'actionneurs (non représentés).

Ce calculateur 45 comporte une mémoire programme 46 et une mémoire de données 47 connectées à un microprocesseur 48 via un bus de communication 49. Le calculateur 45 est connecté aux différents organes de la boîte de vitesses 1 ci-dessus décrits, par l'intermédiaire d'un autre bus de communication 50.

Le calculateur 45 comporte en outre une interface d'entrée/sortie 51, permettant de relier les bus 49 et 50.

Les actions menées par le calculateur 45, sont ordonnées par le microprocesseur 48. Le microprocesseur 48 produit, en réponse aux codes instructions enregistrés dans la mémoire programme 46 des ordres destinés aux différents organes de la boîte de vitesses 1.

La mémoire programme 46 comporte à cet effet plusieurs zones de programme 60-97, correspondant respectivement à une suite d'étapes.

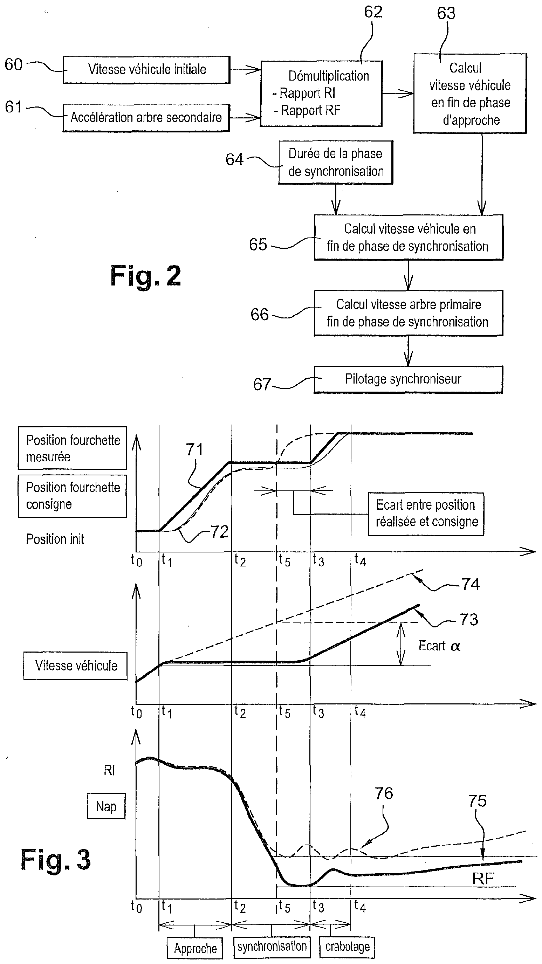

La figure 2 est un exemple d'un diagramme fonctionnel du procédé selon l'invention. Pour passer à un instant t0 d'un rapport RI initial engagé, à un rapport RF final à un instant t1, suite à une sollicitation du conducteur ou de manière automatique, un capteur (non représenté) mesure à une étape 60, la vitesse initiale du véhicule, autrement dit au début du passage de rapport. Un autre capteur (non représenté) mesure à une étape 61 l'accélération de l'arbre secondaire.

A une étape 62, le calculateur détermine des rapports de démultiplication KI, KF, respectivement du rapport RI initial et du rapport RF final. Pour cela, le calculateur 45 utilise des algorithmes complexes connus appelé lois de passage permettant de connaître le rapport RF final.

On en déduit dans une étape 63, la vitesse du véhicule en fin de phase d'approche Vfapp. Autrement dit, au moment du désengagement du rapport initial. En outre, à l'étape 64, le calculateur 45 comporte dans sa mémoire de donnée 47 des temps de synchronisation prédéterminés à des conditions de changement de rapport. Ces temps de synchronisation dépendent de la volonté du conducteur, de la vitesse du véhicule, de la sportivité souhaitée par le conducteur, du régime moteur et des lois de changement de rapport du véhicule. Ces temps de synchronisation peuvent être déterminés selon la divulgation décrite dans le document FR-A-2 915 260. En fonction des conditions de changement du rapport de vitesse pour passer de RI à RF, une valeur de temps Ts prédéterminée est transmise au microprocesseur 48.

Dans une étape 65, le calculateur 45 détermine la vitesse du véhicule a la fin de la phase de synchronisation Vfsynch. On en déduit à l'étape 66, le régime de l'arbre primaire en fin de phase de synchronisation. Ce régime se détermine à partir de l'expression suivante :

$$Wapfinale = \frac{Vfsynch}{2} \times 60 \times \frac{1}{Kpont} \times \frac{1}{Kf}$$

Kpont étant la démultiplication du pont
Kf étant la démultiplication du rapport final
Vfsynch = Vfapp + A X Ts , A étant l'accélération de l'arbre secondaire.

Dans une étape 67, le calculateur 45 pilote en position la phase de crabotage du rapport cible lorsque le crabot et le pignon à engrener sont à la même vitesse.

La figure 3 est une représentation graphique illustrant un ensemble de courbes temporelles. Une première courbe 71 illustre la consigne du calculateur 45 pour piloter en position des fourchettes à crabot de la boîte de vitesses 1. A un instant t0, le rapport RI initial est engagé, la couronne du crabot est engrenée sur le pignon initial. Une requête de changement de rapport est reçue par le calculateur 45, suite à la sollicitation du conducteur ou de manière automatique, à un instant t1. Le calculateur 45 commande une phase d'approche entre l'instant t1 et un instant t2. Durant cette phase d'approche le calculateur 45 pilote en position boucle fermée une fourchette initiale permettant de décraboter la couronne du crabot engrené sur le pignon du rapport initial RI. Lorsque le pignon du rapport initial RI est décraboté, le calculateur 45 pilote le déplacement d'une fourchette finale permettant d'effectuer le crabotage du pignon du rapport final RF. Entre l'instant t2 et un instant t3, le calculateur 45 commande la phase de synchronisation. Durant cette phase de synchronisation, le calculateur 45 pilote en effort boucle ouverte la fourchette finale. A l'instant t3, la vitesse du pignon à engrener et la vitesse de l'arbre primaire finale sont équivalentes, la phase de synchronisation prend fin. Entre l'instant t3 et un instant t4, le calculateur 45 commande une phase de crabotage. Durant cette phase de crabotage, le calculateur 45 pilote en position jusqu'à une position de butée l'engrènement du crabot avec le pignon du rapport final. A l'instant t4 le rapport final est engagé.

Une courbe 72 illustre la position réelle des fourchettes par rapport à la courbe 71. Cette courbe est sensiblement tangentielle à la courbe de consigne du calculateur 45, toutefois, à un instant t5 entre les instants t2 et t3, lors de la fin de la phase de synchronisation effective, le synchroniseur libère la fourchette de passage. Si le pilotage en position n'est pas bien calé avec la réalité physique, la fourchette est dégagée mais non pilotée.

Une courbe 73 illustre la vitesse du véhicule avec rupture de couple. Cette courbe 73 s'adresse particulièrement aux véhicules classiques, autrement dit, au véhicule comportant un groupe motopropulseur thermique associé à une boîte de vitesse mécanique ou une boîte de vitesse mécanique pilotée. On note en effet que durant le passage de rapport, l'embrayage est ouvert et il n'y a plus de transmission de couple entre le moteur thermique et les roues du véhicule.

Une courbe 74 illustre la vitesse du véhicule sans rupture de couple. Cette courbe 74 s'adresse particulièrement aux véhicules à architecture hybride ou équipés d'une boîte de vitesse à double embrayage.

On constate qu'à l'instant t5, autrement dit, lorsque la fin de la phase de synchronisation est effective, l'écart de vitesse avec ou sans rupture de couple correspond à une valeur a.

Une courbe 75 correspond à la vitesse de l'arbre primaire avec rupture de couple. Une courbe 76 correspond à la vitesse de l'arbre primaire sans rupture de couple. On constate un écart de régime lors de la détection de la fin de synchronisation entre ces deux courbes 75, 76. Cela implique un retard de la consigne de pilotage de crabotage.

Exemple de calcul sur un passage de rapport de la première à la deuxième vitesse :
Pour les hypothèses suivantes :

- Démultiplication de 1$^{\text{ère}}$ : K1 = 13/46 ;
- Démultiplication de 2$^{\text{nd}}$ : K2 = 24/49 ;
- Démultiplication du pont : Kpont = 14/71 ;
- Circonférence au roulement roues : Cr = 2m ;
- Accélération du véhicule : A = 3m/s$^2$ ;
- Vitesse véhicule au début du passage de rapport : VitVéhinit = 30km/h ;
- Durée de la phase de synchronisation : TS = 100ms ;
- Temps de la phase d'approche du synchroniseur : Tap = 0,12 s ;

A) Détermination du régime de l'arbre primaire cible en fin de synchronisation dans le cas d'une boîte de vitesse mécanique pilotée classique :
VitVéhinit = 30km/h = 30/3,6 = 8,33 m/s ;

$$\text{Wapinit} = \frac{8,33}{2} \times 60 \times \frac{1}{\text{Kpont}} \times \frac{1}{\text{K1}} = 4486 \text{ tr/min}$$

$$\text{Wapfinale} = \frac{8,33}{2} \times 60 \times \frac{1}{\text{Kpont}} \times \frac{1}{\text{K2}} = 2586 \text{ tr/min}$$

B) Détermination du régime de l'arbre primaire cible en fin de synchronisation dans le cas d'une accélération de 3m/s$^2$ à l'arbre secondaire :
VitVéhinit = 30km/h = 30/3,6 = 8,33 m/s ;
Vfapp = 8,33 + 3 x 0,12 = 8,69 m/s;
Vfsynch = 8,69 + 3 x 0,1 = 8,99 m/s ;

$$\text{Wapfinale} = \frac{8,99}{2} \times 60 \times \frac{1}{\text{Kpont}} \times \frac{1}{\text{K2}} = 2792 \text{ tr/min}$$

C) Ecart entre les deux méthodes de calcul du régime de l'arbre primaire cible en fin de synchronisation:

$$\Delta Nap = 2586 - 2792 = 206 \text{ tr/min} ;$$

Conclusion : Un écart de 200 tr/min de détection de la fin de synchronisation existe entre les deux méthodes. Cela implique un retard de la consigne de pilotage de la phase de crabotage supérieur à 10 ms. Du fait de ce retard, le synchroniseur libère la fourchette de passage de rapport avant que la fin de la phase de synchronisation ne soit détectée. Le procédé selon l'invention permet ainsi d'effectuer une phase de crabotage au moment le plus opportun pour engrener le crabot sur le pignon du rapport final.

**Revendications**

1. Procédé de commande d'une boîte de vitesses pilotée pour véhicule automobile hybride ou à double embrayage, pour passer d'un rapport (RI) initial à un rapport (RF) final,
   **caractérisé en ce que** lors de la phase de synchronisation:

   - on détermine la vitesse finale de l'arbre primaire cible de la synchronisation pour effectuer une phase de crabotage,
   - cette vitesse finale de l'arbre primaire cible étant fonction de la vitesse de l'arbre primaire avant le changement de rapport, de l'accélération du véhicule durant une phase d'approche du synchroniseur et d'un temps de synchronisation prédéterminées.

2. Procédé selon la revendication 1, **caractérisé en ce que** la vitesse finale Wapfinale de l'arbre primaire cible vaut :

$$Wapfinale = (Vfsynch/2)*60* (1/Kpont)*(1/Kf),$$

$$Vfsynch = Vfapp + A*T,$$

$$Vfapp = VitVehinit + A*Tap,$$

VitVehinit étant la vitesse du véhicule au début du passage du rapport, A étant l'accélération du véhicule,

$$T = Ts + Tap$$

   Tap étant le temps de la phase d'approche du synchroniseur,
   Ts étant la durée de la phase de synchronisation,
   Kpont étant le rapport de démultiplication du pont,
   Kf étant le rapport de démultiplication du rapport final.

3. Procédé selon l'une quelconque des revendications 1 à 2, **caractérisé en ce que** l'on ajuste l'instant de pilotage en vitesse de la phase de crabotage du crabot à engrener en fonction de la vitesse finale de l'arbre primaire cible déterminée.

4. Procédé selon l'une quelconque des revendications 1 à 3, **caractérisé en ce que** le changement de rapport de vitesse est commandé par le conducteur et/ou par le mode automatique de changement de rapport.

5. boîte de vitesses à double embrayage d'un véhicule automobile comportant :

   - un premier embrayage 3, entraînant un premier arbre primaire 4 creux et un second embrayage 5, juxtaposé au premier, entraînant un deuxième arbre primaire 6 plein, passant à l'intérieur de l'arbre primaire 4 creux,
   - les arbres primaires 4, 6 étant couplés chacun aux arbres secondaires 7, 8 par l'intermédiaire de rapports de vitesse,
   - ces rapports de vitesse étant répartis en deux demi-boîte, une première demi-boîte comporte des rapports de vitesse pairs et une deuxième demi-boîte comporte des rapports de vitesse impairs,
- un rapport de vitesse comportant un premier pignon, lié solidairement à un arbre primaire, engrené par un deuxième pignon monté libre en rotation sur un arbre secondaire et rendu solidaire de cet arbre au moyen de boîte à crabots,

**caractérisé en ce qu'**elle comporte des moyens mettant en oeuvre le procédé selon l'une quelconque des caractéristiques précédentes.

**Patentansprüche**

1.  Verfahren zur Steuerung eines gesteuerten Schaltgetriebes für Hybrid- oder Doppelkupplungskraftfahrzeug, um von einem anfänglichen Gang (RI) zu einem Endgang (RF) überzugehen, **dadurch gekennzeichnet, dass** während der Synchronisationsphase:

    - die Enddrehzahl der Zielprimärwelle der Synchronisation zum Ausführen einer Klauenkupplungsphase bestimmt wird,
    - wobei diese Enddrehzahl der Zielprimärwelle von der Drehzahl der Primärwelle vor dem Gangwechsel, von der vorbestimmten Beschleunigung des Fahrzeugs während einer Annäherungsphase der Synchronisierungskupplungsnabe und einer vorbestimmten Synchronisationszeit abhängt.

2.  Verfahren nach Anspruch 1, **dadurch gekennzeichnet, dass** die Enddrehzahl Wapfinale der Zielprimärwelle Folgendem entspricht:

$$\text{Wapfinale} = (\text{Vfsynch}/2)*60*(1/\text{Kpont})*(1/\text{Kf}),$$

$$\text{Vfsynch} = \text{Vfapp} + A*T,$$

$$\text{Vfapp} = \text{VitVehinit} + A*\text{Tap},$$

    wobei VitVehinit die Geschwindigkeit des Fahrzeugs zu Beginn des Gangwechsels ist,
    A die Beschleunigung des Fahrzeugs ist,

$$T = \text{Ts} + \text{Tap}$$

    Tap die Zeit der Annäherungsphase der Synchronisierungskupplungsnabe ist,
    Ts die Dauer der Synchronisationsphase ist,
    Kpont das Untersetzungsverhältnis der Brücke ist,
    Kf das Untersetzungsverhältnis des Endgangs ist.

3.  Verfahren nach einem der Ansprüche 1 bis 2, **dadurch gekennzeichnet, dass** der Drehzahlsteueraugenblick der Klauenkupplungsphase der einzurückenden Klaue in Abhängigkeit von der bestimmten Endgeschwindigkeit der Zielprimärwelle angepasst wird.

4.  Verfahren nach einem der Ansprüche 1 bis 3, **dadurch gekennzeichnet, dass** der Gangwechsel von dem Fahrer und/oder von dem Gangwechsel-Automatikmodus gesteuert wird.

5.  Schaltgetriebe mit Doppelkupplung eines Kraftfahrzeugs, die Folgendes umfasst:

    - eine erste Kupplung 3, die eine erste hohle Primärwelle 4 antreibt, und eine zweite Kupplung 5, die neben der ersten Kupplung angeordnet ist, die eine zweite massive Primärwelle 6 antreibt, die durch das Innere der hohlen Primärwelle 4 durchgeht,
    - wobei die Primärwellen 4, 6 jeweils mit den Sekundärwellen 7, 8 über Gänge gekoppelt sind,

- wobei diese Gänge in zwei Halbgehäuse verteilt sind, wobei ein erstes Halbgehäuse geradzahlige Gänge umfasst, und ein zweites Halbgehäuse ungeradzahlige Gänge umfasst,
- wobei ein Gang ein erstes Ritzel umfasst, das fest mit einer Primärwelle verbunden ist, in das ein zweites Ritzel eingreift, das in Drehung auf einer Sekundärwelle montiert und mit dieser Welle mittels dem Klauenschaltungsgehäuse fest verbunden ist,

**dadurch gekennzeichnet, dass** es Mittel umfasst, die das Verfahren nach einem der vorstehenden Merkmale umsetzen.

**Claims**

1. A method for controlling a semiautomatic gearbox of a hybrid or dual-clutch automobile, for shifting from an initial gear (RI) to a final gear (RF),
   **characterized in that** during the synchronisation phase:

   - the final speed of the input shaft that is the target for the synchronisation is determined in order to perform a dog-clutching phase,
   - said final speed of the target input shaft depending on the predetermined speed of the input shaft before shifting gears, the predetermined acceleration of the vehicle during an approach phase of the synchroniser, and a predetermined synchronisation time.

2. The method according to Claim 1, **characterized in that** the final speed Wapfinale of the target input shaft has the value:

$$\text{Wapfinale} = (\text{Vfsynch}/2)*60*(1(\text{Kpont})*(1/\text{Kf}),$$

$$\text{Vfsynch} = \text{Vfapp} + A*T,$$

$$\text{Vfapp} = \text{VitVehinit} + A*\text{Tap},$$

   VitVehinit being the speed of the vehicle at the start of the shift,
   A being the acceleration of the vehicle,

$$T = Ts + Tap$$

   Tap being the time of the approach phase of the synchroniser,
   Ts being the duration of the synchronisation phase,
   Kpont being the reduction ratio of the bridge,
   Kf being the reduction ratio of the final gear.

3. The method according to any one of Claims 1 to 2, **characterized in that** the moment of speed control of the dog-clutching phase of the dog-clutch which is to be meshed is adjusted as a function of the final speed of the determined target input shaft.

4. The method according to any one of Claims 1 to 3, **characterized in that** the change of gear ratio is controlled by the driver and/or by the automatic gear ratio change mode.

5. A dual-clutch gearbox of an automobile, comprising:

   - a first clutch 3, driving a first hollow input shaft 4 and a second clutch 5, juxtaposed to the first, driving a second solid input shaft 6, passing in the interior of the hollow input shaft 4,
   - the input shafts 4, 6 being each coupled to the output shafts 7, 8 by means of gear ratios,

- these gear ratios being distributed in two half-boxes, a first half-box comprises even gear ratios and a second half-box comprises odd gear ratios,
- a gear ratio comprising a first gear, linked integrally to an input shaft, meshed by a second gear mounted freely in rotation on an output shaft and rendered integral with this shaft by means of a dog-clutch box,

**characterized in that** it comprises means implementing the method according to any one of the preceding characteristics.

**Fig. 1**

## Fig. 2

```
60 ──[ Vitesse véhicule initiale ]──▷ ┌─────────────────┐     ┌─────────────────┐
                                      │  Démultiplication│     │     Calcul      │
                                      │  - Rapport RI    │──▷  │ vitesse véhicule│
61 ──[ Accélération arbre secondaire]─▷│  - Rapport RF   │     │  en fin de phase│
                                      └─────────────────┘     │   d'approche    │
                                              62                      63
```

```
            ┌─────────────────────┐
      64 ──[│   Durée de la phase  │
            │  de synchronisation  │
            └─────────────────────┘
                      │
                      ▽
      ┌────────────────────────────────────┐
65 ──[│     Calcul vitesse véhicule en      │◁───
      │   fin de phase de synchronisation   │
      └────────────────────────────────────┘
                      │
                      ▽
      ┌────────────────────────────────────┐
66 ──[│     Calcul vitesse arbre primaire   │
      │   fin de phase de synchronisation   │
      └────────────────────────────────────┘
                      │
                      ▽
      ┌────────────────────────────────────┐
67 ──[│        Pilotage synchroniseur       │
      └────────────────────────────────────┘
```

## Fig. 3

Position fourchette mesurée

Position fourchette consigne

Position init

Ecart entre position réalisée et consigne

Vitesse véhicule

Ecart $\alpha$

RI

Nap

RF

Approche | synchronisation | crabotage

$t_0$ $t_1$ $t_2$ $t_5$ $t_3$ $t_4$

**EP 2 486 307 B1**

## RÉFÉRENCES CITÉES DANS LA DESCRIPTION

**Documents brevets cités dans la description**

- FR 2915260 A
- FR 2794512 A
- FR 2849129 A